# EUROPEAN PATENT APPLICATION

(11) **EP 4 741 217 A1**
(43) Date of publication of application: **13.05.2026**
(21) Application number: 25213533.0
(22) Date of filing: 05.11.2025
(51) Int. Cl.: B60L 53/66, G05B 19/042, H04L 45/00

(54) **CHARGE POINT COMMUNICATION SYSTEM AND CHARGE POINT COMMUNICATION METHOD**

(30) Priority: 07.11.2024 US 202463717298 P
(71) Applicant: Lite-On Technology Corporation, Taipei City 11492 (TW)
(72) Inventor: CHEN, Ching-Chi, 11492 Taipei (TW)
(74) Representative: Becker, Eberhard

(57) **Abstract**

A charge point communication system and a charge point communication method are provided. A first gateway charge point (110, 210, 320_1, 510, 610, 710, 810, 910, 1110) is communicatively connected to a charging station management server (CS1). The first gateway charge point (110, 210, 320_1, 510, 610, 710, 810, 910, 1110) assigns charging current to the first gateway charge point (110, 210, 320_1, 510, 610, 710, 810, 910, 1110) and the first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) within a first charge point group (CG11, CG21, CG41) based on a total current limit of the first charge point group (CG11, CG21, CG41).

## Description

### BACKGROUND

### Technical Field

The disclosure relates to charge point management technology, and particularly relates to a charge point communication system and a charge point communication method.

### Related Art

In order to reduce carbon emissions and address global warming, countries around the world have been actively promoting the development of electric vehicle (EV) technologies h and have set long-term goals to ban the sale of fuel-powered vehicles. Governments and industries are implementing policies and subsidy programs to accelerate the adoption and market growth of EVs. However, as the number of EVs rapidly increases, the expansion and management of charging infrastructure face numerous challenges, particularly in terms of network connectivity and charging coordination. More specifically, as the number of charge point grows, a reliable and stable communication system becomes essential to ensure that all charge points can promptly report their charging status to a central management system or receive dispatch instructions from it in real time. When a large number of charge points need to communicate with the central management system via mobile networks, each point is required to equip with mobile communication functionalities. This places a significant burden on mobile network infrastructure, such as base stations. Furthermore, equipping each charge point with mobile communication functionalities not only increases hardware costs but also incurs high mobile data usage fees, which can be a heavy financial burden for charging station operators. Additionally, the massive data transmission demands from numerous charge points communicating with central management system via mobile networks may lead to base station overload, resulting in degraded communication quality or increased transmission latency.

### SUMMARY

In view of this, the disclosure provides a charge point communication system and a charge point communication method, which adopts hierarchical architecture, which multiple client charge points can communicate with a charging station management server via a gateway charge point, thereby allowing the charge points to share mobile communication network resources.

An embodiment of the disclosure provides a charge point communication system including a first gateway charge point and multiple first client charge points. The first gateway charge point may be communicatively connected to a charging station management server. The first client charge points may be communicatively connected to the first gateway charge point. The first gateway charge point assigns charging current to the first gateway charge point and the first client charge points within a first charge point group based on a total current limit of the first charge point group.

From another perspective, an embodiment of the disclosure provides a charge point communication method applicable to a charge point communication system. The method includes the following steps. A first gateway charge point is communicatively connected to a charging station management server. Multiple first client charge points are communicatively connected to the first gateway charge point. The first gateway charge point assigns charging current to the first gateway charge point and the first client charge points within a first charge point group based on a total current limit of the first charge point group.

Based on the above, in the embodiments of the disclosure, the client charge points may communicate with the charging station management server via the gateway charge point, so that each of the client charge points does not need to be independently connected to a mobile communication network, allowing the charge points to be more flexibly deployed in various charging sites and significantly reducing consumption of mobile communication network resources. In addition, the gateway charge point may perform localized charging load management to achieve more flexible and stable charging scheduling.

### BRIEF DESCRIPTION OF THE DRAWINGS

FIG. 1 is a schematic diagram of a charge point communication system according to an embodiment of the disclosure.
FIG. 2 and FIG. 3 are schematic diagrams of a charge point communication system in a single-layer wireless local area network architecture according to an embodiment of the disclosure.
FIG. 4 and FIG. 5 are schematic diagrams of a charge point communication system in a multi-layer wireless local area network architecture according to an embodiment of the disclosure.
FIG. 6 and FIG. 7 are schematic diagrams of assigning charging current based on an average assigning mechanism according to an embodiment of the disclosure.
FIG. 8 and FIG. 9 are schematic diagrams of assigning charging current based on a priority assigning mechanism according to an embodiment of the disclosure.
FIG. 10 is a flowchart of assigning charging current by a gateway charge point according to an embodiment of the disclosure.
FIG. 11A and FIG. 11B are schematic diagrams of activating a spare gateway charge point according to an embodiment of the disclosure.
FIG. 12 is a schematic diagram of configuring a spare gateway charge point according to an embodiment of the disclosure.
FIG. 13 is a flowchart of a charge point communication method according to an embodiment of the disclosure.

### DESCRIPTION OF THE EMBODIMENTS

Some embodiments of the disclosure are described in detail with reference to the accompanying drawings. The same reference numerals appearing in different drawings are regarded as the same or similar elements. These embodiments are only a part of the disclosure and do not disclose all possible implementations of the disclosure. More specifically, these embodiments are merely examples of the methods and systems within the scope of the claims of the disclosure.

In the disclosure, a charge point is a charging equipment capable of providing charging services for electric vehicles (EV), and may include a charging port configured to provide electrical power. In some embodiments, the charge point may communicate with a charging station management system (CSMS) via an open charge point protocol (OCPP). The charge point may establish an OCPP connection with the CSMS. In the disclosure, based on a communication level of the charge point in a hierarchical network topology, the charge point may include a gateway charge point and a client charge point.

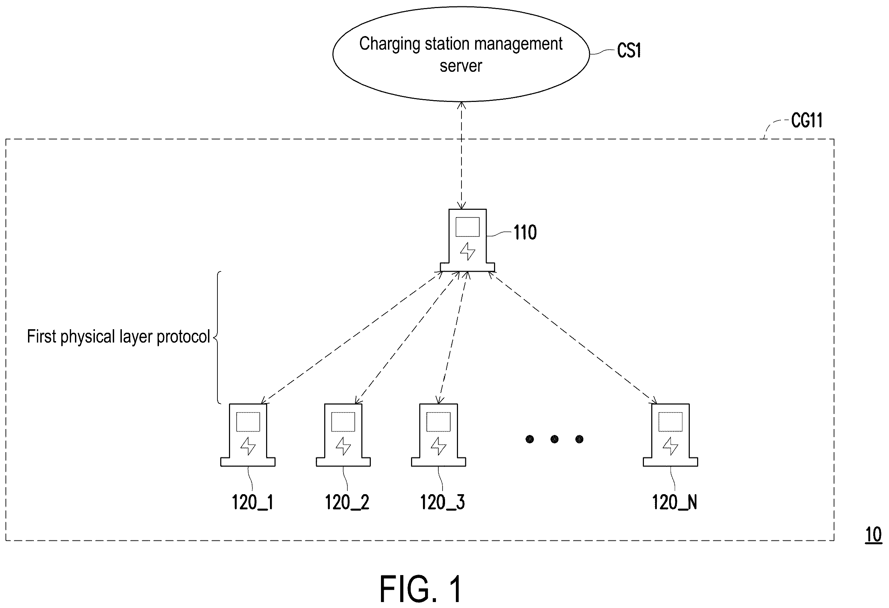

FIG. 1 is a schematic diagram of a charge point communication system according to an embodiment of the disclosure. Referring to FIG. 1, a charge point communication system 10 may include a first gateway charge point 110 and multiple first client charge points 120_1 to 120_N. The disclosure does not limit the quantity of the first client charge points 120_1 to 120_N, which may depend on actual applications and communication hardware limitations.

The first gateway charge point 110 may be a charge point serving as a gateway, which may manage communication and charging scheduling of the first client charge points 120_1 to 120_N. The first gateway charge point 110 may be communicatively connected to a charging station management server CS1. In some embodiments, the charging station management server CS1 may be an OCPP server in a charging station management system (CSMS).

The first client charge points 120_1 to 120_N may be communicatively connected to the first gateway charge point 110 via a first physical layer protocol. That is, the first client charge points 120_1 to 120_N may communicate with the first gateway charge point 110 via the first physical layer protocol. In some embodiments, the first physical layer protocol may be a wireless local area network protocol, such as a Wi-Fi protocol.

In some embodiments, the first gateway charge point 110 may assign charging current to the charge points within a first charge point group CG11, namely the first gateway charge point 110 and the first client charge points 120_1 to 120_N, based on a total current limit of the first charge point group CG11. Specifically, the first gateway charge point 110 may perform a dynamic load management mechanism based on the total current limit of the first charge point group CG11 to dynamically assign the charging current of each of the charge points within the first charge point group CG11.

In some embodiments, the first gateway charge point 110 may receive the total current limit of the first charge point group CG11 from the charging station management server CS1. The total current limit may be determined by the charging station management server CS1 based on real-time load condition of the power grid or other parameters related to charging management, and transmitted to the first gateway charge point 110 via the OCPP protocol. When receiving the total current limit, the first gateway charge point 110 may assign charging current accordingly to ensure that a sum of charging currents of all charge points within the first charge point group CG11 does not exceed the total current limit. In other words, the first gateway charge point 110 may perform localized charging load management, and dynamically adjust charging current based on real-time charging status of the charge points and the total current limit within the first charge point group CG11, to further improve charging efficiency and power resource utilization.

It should be particularly noted that, in some embodiments, the first gateway charge point 110 may be communicatively connected to the charging station management server CS1 via a second physical layer protocol to form a wireless local area network architecture with a single-layer. The second physical layer protocol may be a mobile communication network protocol, such as LTE protocol or 5G protocol. Alternatively, in some embodiments, the first gateway charge point 110 may be connected to the charging station management server CS1 via bridging of other gateway charge points to form a wireless local area network architecture with a multi-layer. For clarity, embodiments are described as follows.

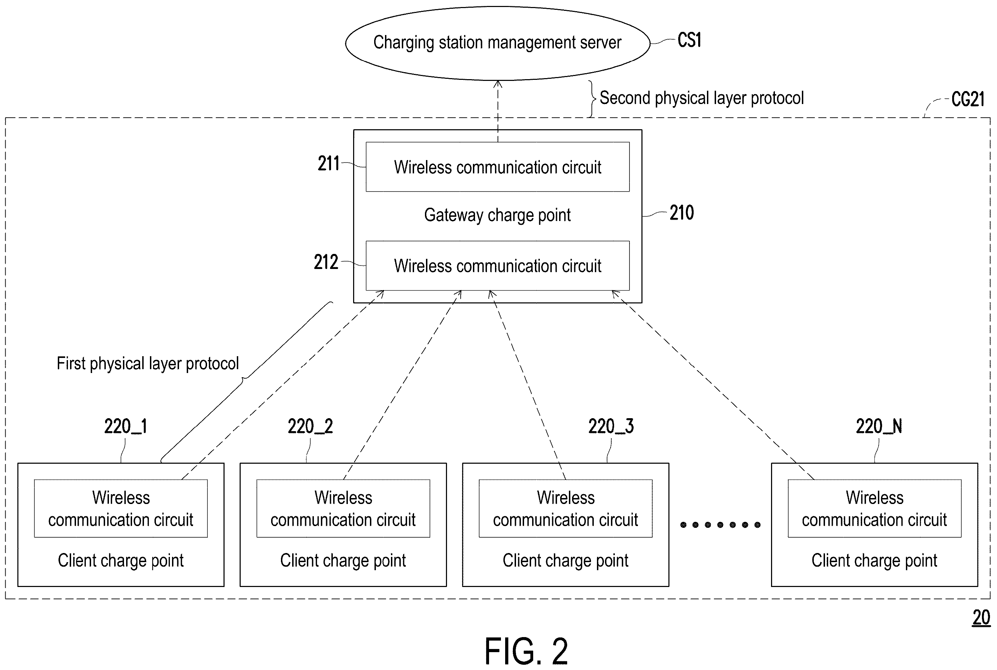

FIG. 2 is a schematic diagram of a charge point communication system in a single-layer wireless local area network architecture according to an embodiment of the disclosure. Referring to FIG. 2, a charge point communication system 20 may include a gateway charge point 210 (that is, the first gateway charge point) and multiple client charge points 220_1 to 220_N (that is, the first client charge points).

The gateway charge point 210 may be communicatively connected to the charging station management server CS1. In the embodiment of FIG. 2, the gateway charge point 210 may be communicatively connected to the charging station management server CS1 via the second physical layer protocol. The client charge points 220_1 to 220_N may be communicatively connected to the gateway charge point 210 via the first physical layer protocol. That is, the gateway charge point 210 may be connected between the charging station management server CS1 and the client charge points 220_1 to 220_N via different physical layer protocols.

In detail, the gateway charge point 210 may include a wireless communication circuit 211 supporting the second physical layer protocol and a wireless communication circuit 212 supporting the first physical layer protocol. In some embodiments, the first physical layer protocol includes a wireless local area network protocol, and the second physical layer protocol includes a mobile communication network protocol. Correspondingly, the wireless communication circuit 211 may include a wireless transceiver and antenna supporting the mobile communication network protocol. The wireless communication circuit 212 may include a wireless transceiver and antenna supporting the wireless local area network protocol.

In some embodiments, the gateway charge point 210 may be connected to a base station deployed by a telecommunications network operator via the wireless communication circuit 211 and based on the mobile communication network protocol, such as an LTE evolved base station (that is, eNB) or a 5G base station (that is, gNB). In other words, the gateway charge point 210 is located within the wireless signal coverage of the base station deployed by the telecommunications network operator, and communicates with the charging station management server CS1 via the mobile communication network. In addition, the client charge points 220_1 to 220_N may be connected to the wireless communication circuit 212 of the gateway charge point 210 via the wireless local area network protocol. Therefore, the client charge points 220_1 to 220_N do not need to have a mobile communication capability to communicate with the charging station management server CS1. Instead, communication is relayed through the gateway charge point 210, thereby sharing mobile communication network resources. It may be seen that the embodiments of the disclosure may reduce network operating cost and communication equipment cost of the charging station. For example, assuming that the gateway charge point 210 may establish wireless local area connections with 8 client charge points 220_1 to 220_8 based on the first physical layer protocol, then a total of 9 charge points (8 client charge points 220_1 to 220_8 and 1 gateway charge point 210) may share the mobile communication network resources available to the gateway charge point 210.

In the embodiment of FIG. 2, the gateway charge point 210 may assign charging current to the gateway charge point 210 and the client charge points 220_1 to 220_N within the first charge point group CG21 based on the total current limit of the first charge point group CG21. The gateway charge point 210 may receive the total current limit assigned by the charging station management server CS1 via the mobile communication network.

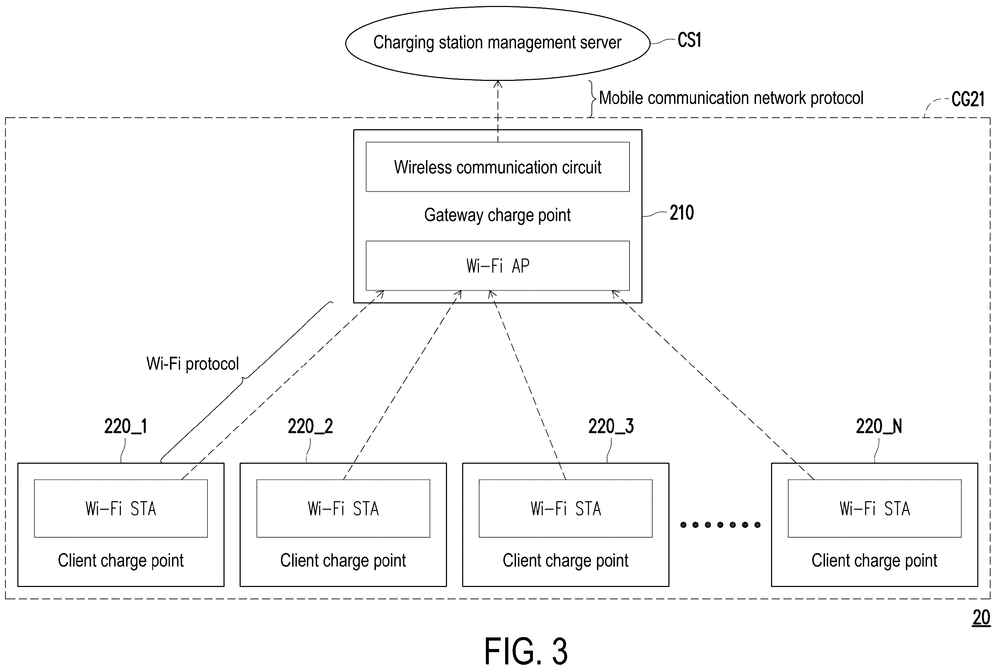

FIG. 3 is a schematic diagram of a charge point communication system in a single-layer wireless local area network architecture according to an embodiment of the disclosure. Referring to FIG. 3, the first physical layer protocol may be a Wi-Fi protocol. The gateway charge point 210 may operate in a Wi-Fi access point mode (Wi-Fi AP mode) and establish Wi-Fi connections with the client charge points 220_1 to 220_N operating in a Wi-Fi station mode (Wi-Fi STA mode). In this situation, the gateway charge point 210 may establish a wireless local area network (WLAN) via the wireless communication circuit 212 and provide a service set identifier (SSID) for the client charge points 220_1 to 220_N to search and connect. In some embodiments, the SSID of the gateway charge point 210 may be generated based on a product serial number of the gateway charge point 210.

Through the bridging of the gateway charge point 210, the client charge points 220_1 to 220_N may share the communication services provided by mobile network operators. Therefore, the client charge points 220_1 to 220_N may establish OCPP connections with the charging station management server CS1 by the gateway charge point 210 to realize functions such as charging status reporting, charging transaction management, and remote control.

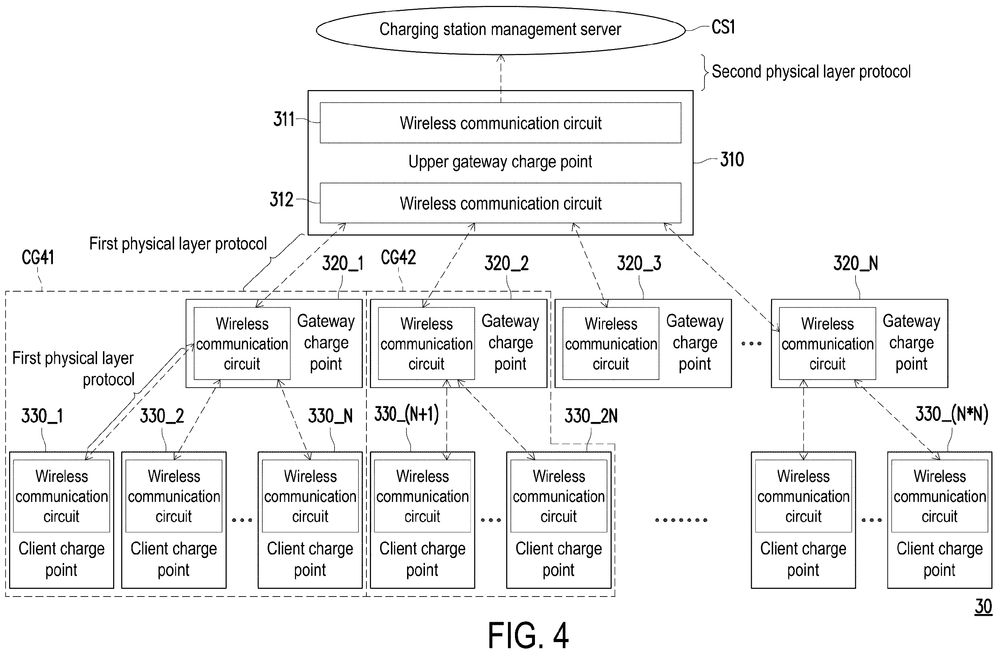

FIG. 4 is a schematic diagram of a charge point communication system in a multi-layer wireless local area network architecture according to an embodiment of the disclosure. Referring to FIG. 4, a charge point communication system 30 may include a gateway charge point 310 in an upper-layer (upper gateway charge point), gateway charge points 320_1 to 320_N (that is, the first gateway charge point 320_1 and the second gateway charge point 320_2 to the Nth gateway charge point 320_N), and multiple client charge points 330_1 to 330_(N*N) (that is, the first client charge points 330_1 to 330_N, the second client charge points 330_(N+1) to 330_2N, and to the Nth client charge points 330_(N*N)).

The upper gateway charge point 310 may be communicatively connected to the charging station management server CS1. In the embodiment of FIG. 4, the upper gateway charge point 310 may be communicatively connected to the charging station management server CS1 via the second physical layer protocol, and may be communicatively connected to the gateway charge points 320_1 to 320_N via the first physical layer protocol. Each of the gateway charge points 320_1 to 320_N is connected between the upper gateway charge point 310 and the client charge points 330_1 to 330_(N*N). For example, the first gateway charge point 320_1 is connected between the upper gateway charge point 310 and the first client charge points 330_1 to 330_N. The second gateway charge point 320_2 is connected between the upper gateway charge point 310 and the second client charge points 330_(N+1) to 330_2N.

In detail, the upper gateway charge point 310 may include a wireless communication circuit 311 supporting the second physical layer protocol and a wireless communication circuit 312 supporting the first physical layer protocol. In some embodiments, the first physical layer protocol includes a wireless local area network protocol, and the second physical layer protocol includes a mobile communication network protocol. The wireless communication circuit 311 may include a wireless transceiver and antenna supporting the mobile communication network protocol. The wireless communication circuit 312 may include a wireless transceiver and antenna supporting the wireless local area network protocol. In addition, the gateway charge points 320_1 to 320_N also include wireless communication circuits supporting the wireless local area network protocol. The wireless communication circuit of each of the gateway charge points 320_1 to 320_N may include a wireless transceiver and antenna supporting the wireless local area network protocol.

In some embodiments, the upper gateway charge point 310 may be connected to a base station deployed by a telecommunications network operator via the wireless communication circuit 311 and based on the mobile communication network protocol. In addition, the gateway charge points 320_1 to 320_N may be connected to the upper gateway charge point 310 and connected to corresponding client charge points 330_1 to 330_(N*N) via the wireless communication circuits supporting the wireless local area network protocol. Therefore, the gateway charge points 320_1 to 320_N and the client charge points 330_1 to 330_(N*N) do not need to have mobile communication capabilities to communicate with the charging station management server CS1; instead, the communication is relayed through the upper gateway charge point 310, thereby sharing mobile communication network resources. The embodiments of the disclosure may reduce network operating costs and communication equipment costs of the charging stations. For example, assuming the upper gateway charge point 310 may establish wireless local area network connections with 8 (N=8) gateway charge points 320_1 to 320_8 based on the first physical layer protocol, and these 8 gateway charge points 320_1 to 320_8 may each establish wireless local area network connections with 8 client charge points 330_1 to 330_64. In this situation, a total of 73 charge points (64 client charge points and 9 gateway charge points) may share the mobile communication network resources.

In the embodiment of FIG.4, the first gateway charge point 320_1 may assign charging current to the first gateway charge point 320_1 and the first client charge points 330_1 to 330_N within a first charge point group CG41 based on the total current limit of the first charge point group CG41. The second gateway charge point 320_2 may assign charging current to each of the second gateway charge point 320_2 and the second client charge points 330_(N+1) to 330_2N within a second charge point group CG42 based on the total current limit of the second charge point group CG42. The first gateway charge point 320_1 receives the total current limit of the first charge point group CG41 from the charging station management server CS1 by the upper gateway charge point 310. The second gateway charge point 320_2 receives the total current limit of the second charge point group CG42 from the charging station management server CS1 by the upper gateway charge point 310. By analogy, the Nth gateway charge point 320_N and the Nth client charge point 330_(N*N)) perform in the same manner. In other words, the total current limits of the charge point groups managed by each of the gateway charge points 320_1 to 320_N may be respectively determined and assigned by the charging station management server CS1. Correspondingly, each of the gateway charge points 320_1 to 320_N may perform localized charging load management for the connected client charge points based on the total current limit.

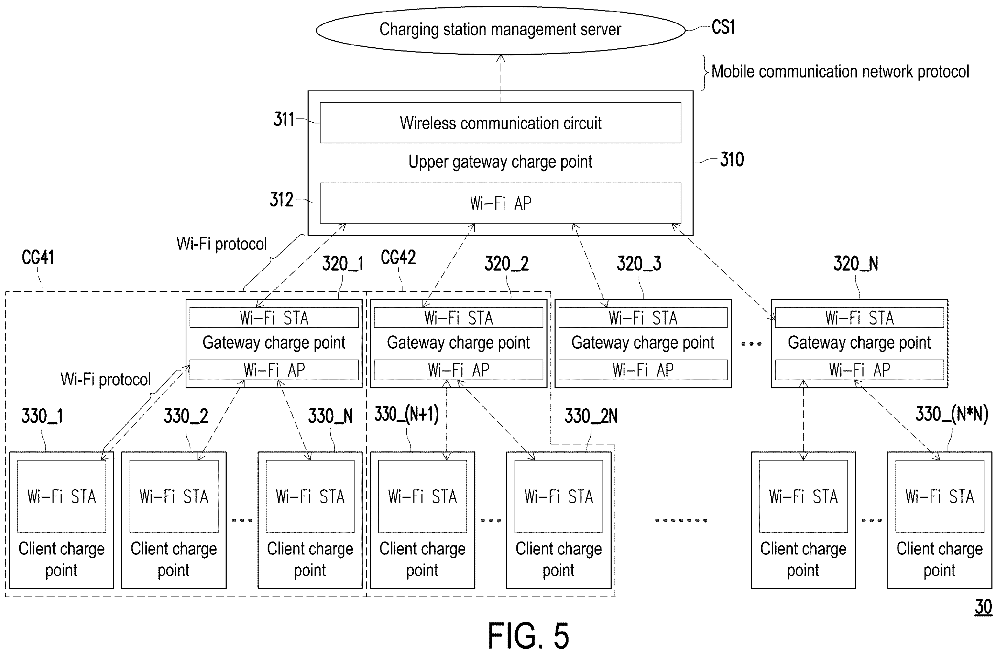

FIG. 5 is a schematic diagram of a charge point communication system in a multi-layer wireless local area network architecture according to an embodiment of the disclosure. Referring to FIG. 5, the first physical layer protocol may be a Wi-Fi protocol. The upper gateway charge point 310 may operate in the Wi-Fi AP mode and be connected to the gateway charge points 320_1 to 320_N operating in the Wi-Fi STA mode. It should be noted that the gateway charge points 320_1 to 320_N may also simultaneously operate in the Wi-Fi AP mode and be connected to the client charge points 330_1 to 330_(N*N) operating in the Wi-Fi STA mode. In other words, the gateway charge points 320_1 to 320_N may simultaneously operate in the access point mode and the station mode at the first physical layer protocol, to communicate with the client charge points 330_1 to 330_(N*N) via the access point mode, and communicate with the upper gateway charge point 310 via the station mode. In this situation, each of the gateway charge points 320_1 to 320_N may establish a WLAN via the wireless communication circuit and provide a dedicated SSID for the client charge points 330_1 to 330_(N*N) to search and connect. For example, the first gateway charge point 320_1 may establish a WLAN and provide an SSID for the first client charge points 330_1 to 330_N to search and connect. The second gateway charge point 320_2 may establish another WLAN and provide another SSID for the first client charge points 330_(N+1) to 330_2N to search and connect. In some embodiments, the dedicated SSID of each of the gateway charge points 320_1 to 320_N may be generated based on the respective product serial numbers of each of the gateway charge points 320_1 to 320_N.

Through the bridging of the upper gateway charge point 310 with the mobile communication capability, the gateway charge points 320_1 to 320_N and the client charge points 330_1 to 330_(N*N) may share the communication services provided by mobile network operators. Therefore, the gateway charge points 320_1 to 320_N and the client charge points 330_1 to 330_(N*N) may establish OCPP connections with the charging station management server CS1 by the upper gateway charge point 310 to realize functions such as charging status reporting, charging transaction management, and remote control.

Based on the example embodiments of FIG. 1 to FIG. 5, it is known that the gateway charge point may perform localized charging load management for the client charge points within the same charge point group. In some embodiments, the gateway charge point may dynamically adjust the charging current of the client charge points based on an average assigning mechanism or a priority assigning mechanism. Embodiments are described as follows.

In some embodiments, the gateway charge point may implement the average assigning mechanism. The gateway charge point may determine an average current value based on the vehicle connection quantity and total current limit of the charge point group to control the client charge points to charge multiple vehicles by the average current value. When the vehicle connection quantity is greater than 1, the average current value is the total current limit divided by the vehicle connection quantity. That is, the gateway charge point may evenly assign the total current limit to the charge points connected to vehicles based on the current vehicle connection quantity.

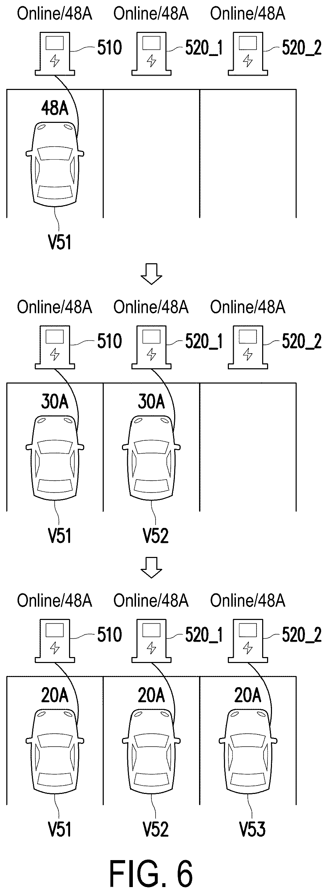

For example, FIG. 6 is a schematic diagram of assigning charging current based on an average assigning mechanism according to an embodiment of the disclosure. Referring to FIG.6, a charge point group (taking the first charge point group as an example for illustration) may include a gateway charge point 510 (that is, the first gateway charge point) and client charge points 520_1 to 520_2 (that is, the first client charge points). The gateway charge point 510 may be connected to the client charge points 520_1 to 520_2 via the wireless local area network protocol. The gateway charge point 510 may dynamically adjust the charging current of itself and the client charge points 520_1 to 520_2 based on the total current limit of this charge point group.

As shown in FIG. 6, when a charging gun of the gateway charge point 510 within the charge point group is inserted into a charging port of a vehicle V51, but the client charge points 520_1 to 520_2 are not connected to any vehicles, the gateway charge point 510 may determine that the vehicle connection quantity is "1". Thereafter, the gateway charge point 510 may charge the vehicle V51 based on the maximum charging current of the gateway charge point 510, for example, 48A.

Next, during the process of charging the vehicle V51, if a charging gun of the client charge point 520_1 is inserted into a charging port of a vehicle V52, the gateway charge point 510 may determine that the vehicle connection quantity at this time is "2". Assuming the total current limit of the charge point group including the gateway charge point 510 and the client charge points 520_1 to 520_2 is 60A, the gateway charge point 510 may determine the average current value to be 60A/2=30A. Thereafter, the gateway charge point 510 switches to charge the vehicle V51 by the average current value of 30A, and the gateway charge point 510 may control the client charge point 520_1 to charge the vehicle V52 by the average current value 30A.

Next, during the process of charging the vehicle V51 and the vehicle V52, if a charging gun of the client charge point 520_2 is inserted into a charging port of a vehicle V53, the gateway charge point 510 may determine that at this time the vehicle connection quantity is "3". The gateway charge point 510 may determine the average current value to be 60A/3=20A. Thereafter, the gateway charge point 510 switches to charge the vehicle V51 by the average current value 20A, and the gateway charge point 510 may control the client charge points 520_1 to 520_2 to charge the vehicle V52 and the vehicle V53 by the average current value 20A. By assigning the average charging current, a single vehicle or charge point may be avoided from obtaining excessive or insufficient power, thereby achieving a stable and fair charging scheduling strategy.

In some embodiments, when one or more of the client charge points (for example, the first client charge point 520_2) within a charge point group (that is, the first charge point group) is disconnected from the gateway charge point and becomes an offline charge point, the gateway charge point still reserves spare charging current for the offline charge point. That is, when certain client charge points are disconnected from the gateway charge point due to malfunction or any other reasons, the gateway charge point may reserve the spare charging current for use by the offline charge points. The spare charging current may be assigned by the charging station management server. The gateway charge point determines the average current value based on the spare charging current and the vehicle connection quantity and the total current limit of the charge point group, and controls multiple online charge points in the client charge points to charge multiple vehicles by the average current value. Furthermore, the gateway charge point may first detect the quantity of offline charge points, and multiply the quantity of offline charge points by the spare charging current to obtain offline reserved charging current. Subsequently, the gateway charge point may deduct the offline reserved charging current from the total current limit, and then divide the remaining current by the vehicle connection quantity to obtain the average current value.

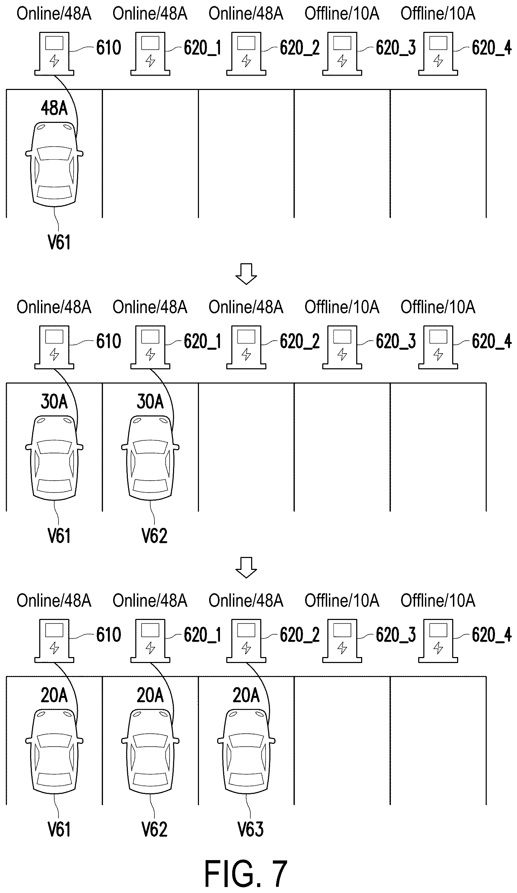

For example, FIG. 7 is a schematic diagram of an example of assigning charging current based on an average assigning mechanism according to an embodiment of the disclosure. Referring to FIG. 7, a charge point group (that is, a first charge point group) may include a gateway charge point 610 (that is, the first gateway charge point) and client charge points 620_1 to 620_4 (that is, first client charge points). The gateway charge point 610 may dynamically adjust the charging current of itself and the client charge points 620_1 to 620_4 based on the total current limit of the charge point group.

In the example of FIG. 7, if the gateway charge point 610 detects that client charge points 620_3 to 620_4 change from an online status to an offline status, the client charge points 620_3 to 620_4 may be determined as offline charge points. The gateway charge point 610 may reserve the spare charging current, for example, 10A for each of the client charge points 620_3 to 620_4. That is, the maximum charging current of each of the offline charge points equals the spare charging current-10A.

If a charging gun of the gateway charge point 610 is inserted into a charging port of a vehicle V61, but the client charge points 620_1 to 620_4 are not connected to any vehicles, the gateway charge point 610 may determine that the vehicle connection quantity is "1". Subsequently, the gateway charge point 610 may charge the vehicle V61 based on the maximum charging current 48A of the gateway charge point 610.

Next, during the process of charging the vehicle V61, if a charging gun of the client charge point 620_1 is inserted into a charging port of a vehicle V62, the gateway charge point 610 may determine that at this time the vehicle connection quantity is "2". Assuming that the total current limit of the charge point group including the gateway charge point 610 and the client charge points 620_1 to 620_4 is 80A, the gateway charge point 610 may determine the average current value based on the spare charging current-10A, the quantity of offline charge points, the vehicle connection quantity, and the total current limit-80A, of the charge point group. Here, the gateway charge point 610 may determine the average current value as (80A-20A)/2=30A. Subsequently, the gateway charge point 610 switches to charge the vehicle V61 by the average current value 30A, and the gateway charge point 610 may control the client charge point 620_1 to charge the vehicle V62 by the average current value 30A.

Next, during the process of charging the vehicle V61 and the vehicle V62, if a charging gun of the client charge point 620_2 is inserted into a charging port of the vehicle V63, the gateway charge point 610 may determine that at this time the vehicle connection quantity is "3". Similarly, the gateway charge point 610 may determine the average current value as (80A-20A)/3=20A. Subsequently, the gateway charge point 610 switches to charge the vehicle V61 by the average current value-20A, and the gateway charge point 610 may control the client charge points 620_1 to 620_2 to charge the vehicle V62 and the vehicle V63 by the average current value-20A.

In some embodiments, the gateway charge point (that is, the first gateway charge point 610) within the charge point group (that is, the first charge point group) implements the priority assigning mechanism. The gateway charge point may determine multiple non-average current values from the total current of the charge point group based on the time at which the vehicles are connected to the client charge points (that is, the first client charge points 620_1 to 620_4), and control the client charge points to charge the vehicles by the non-average current values. In some embodiments, earlier-arriving vehicles may occupy higher charging current compared to later-arriving vehicles. That is, the gateway charge point may allocate the total current limit as the non-average current values available to each of the client charge points based on the order in which the vehicles connected to the client charge points. The gateway charge point may distribute the total current limit to the client charge points based on a first-come-first-served principle.

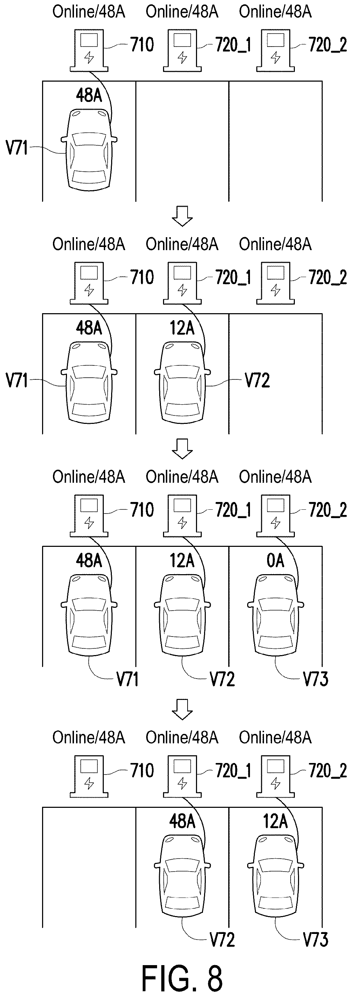

For example, FIG. 8 is a schematic diagram of assigning charging current based on a priority assigning mechanism according to an embodiment of the disclosure. Referring to FIG. 8, a charge point group (taking the first charge point group as an example for illustration) may include a gateway charge point 710 and client charge points 720_1 to 720_2. The gateway charge point 710 may be connected to the client charge points 720_1 to 720_2 via the wireless local area network protocol. The gateway charge point 710 may dynamically adjust the charging current of itself and the client charge points 720_1 to 720_2 based on the total current limit of the charge point group.

As shown in FIG. 8, when a charging gun of the gateway charge point 710 within the charge point group is inserted into a charging port of a vehicle V71, but the client charge points 720_1 to 720_2 are not connected to any vehicle, the gateway charge point 710 may charge the vehicle V71 based on the maximum charging current-48A of the gateway charge point 710.

During the process of charging the vehicle V71, if a charging gun of the client charge point 720_1 is inserted into a charging port of the vehicle V72, the gateway charge point 710 compares a time point at which the vehicle V71 is connected to the gateway charge point 710 with a time point at which the vehicle V72 is connected to the client charge point 720_1. The following assumed that the total current limit of the charge point group including the gateway charge point 710 and the client charge points 720_1 to 720_2 is 60A. Since the time point at which the vehicle V71 is connected to the gateway charge point 710 is earlier than the time point at which the vehicle V72 is connected to the client charge point 720_1, the gateway charge point 710 may determine a non-average current value of the client charge point 720_1 as 60-48=12A. Thereafter, the gateway charge point 710 maintains to charge the vehicle V71 by the maximum charging current-48A, which is an non-average value, and the gateway charge point 710 may control the client charge point 720_1 to charge the vehicle V72 by another non-average current value-12A.

Next, during the process of charging the vehicle V71 and the vehicle V72, if a charging gun of the client charge point 720_2 is inserted into a charging port of the vehicle V73. Since the vehicle V73 is connected to the client charge point 720_2 latest, and the total current limit of the charge point group has been completely assigned to the gateway charge point 710 and the client charge point 720_1, the gateway charge point 710 may determine a non-average current value of the client charge point 720_2 as 0A. In other words, during the process of charging the vehicle V71 and the vehicle V72, the gateway charge point 710 may control the client charge point 720_2 not to charge the vehicle V73.

Thereafter, if the charging gun of the gateway charge point 710 is disconnected from the charging port of the vehicle V71, the gateway charge point 710 compares the time point at which the vehicle V72 is connected to the client charge point 720_1 with a time point at which the vehicle V73 is connected to the client charge point 720_2. Since the client charge point 720_1 is connected to the vehicle V72 earlier, the gateway charge point 710 determines that the client charge point 720_1 may charge the vehicle V72 by the maximum charging current-48A, and the gateway charge point 710 may control the client charge point 720_2 to start charging the vehicle V73 by a non-average current value-12A. In other words, after the vehicle V71 stops charging, the client charge point 720_1 switches to charge the vehicle V72 by the maximum charging current-48A, and the client charge point 720_2 switches to charge the vehicle V73 by a non-average current value-12A.

In some embodiments, if one or more of the client charge points (for example, the first client charge point 720_2) within a charge point group (for example, the first charge point group) is disconnected from the gateway charge point and becomes an offline charge point, the gateway charge point still reserves a spare charging current for the offline charge point. The gateway charge point determines the non-average current values based on the spare charging current, the time at which the vehicles are connected to the client charge points, and the total current limit of the charge point group, and controls the online charge points of the client charge points to charge the vehicles by the non-average current values. Furthermore, the gateway charge point may first detect the quantity of offline charge points, and multiply the quantity of offline charge points by the spare charging current to obtain an offline reserved charging current. Next, the gateway charge point may deduct this offline reserved charging current from the total current limit, and then allocate the remaining current to the client charge points based on the first-come-first-served principle.

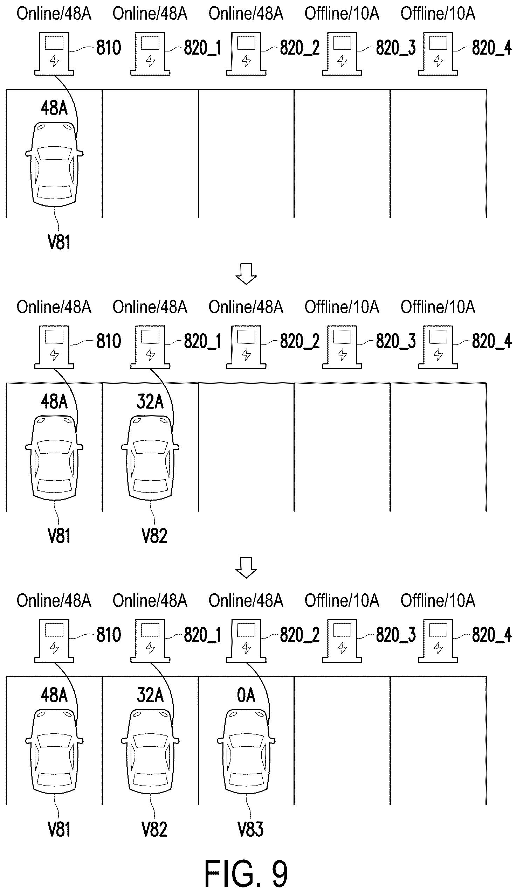

For example, FIG. 9 is a schematic diagram of assigning charging current based on a priority assigning mechanism according to an embodiment of the disclosure. Referring to FIG. 9, a charge point group (for example, the first charge point group) may include a gateway charge point 810 (that is, the first gateway charge point) and client charge points 820_1 to 820_4 (that is, the first client charge points). The gateway charge point 810 may dynamically adjust the charging current of itself and the client charge points 820_1 to 820_4 based on the total current limit of the charge point group.

In the example of FIG. 9, if the gateway charge point 810 detects that the client charge points 820_3 to 820_4 change from the online status to the offline status, the client charge points 820_3 to 820_4 may be determined as offline charge points. The gateway charge point 810 may reserve spare charging current-10A for each of the client charge points 820_3 to 820_4. That is, the maximum charging current of the offline charge points equals the spare charging current-10A.

If a charging gun of the gateway charge point 810 is inserted into a charging port of a vehicle V81, but the client charge points 820_1 to 820_4 are not connected to any vehicle, the gateway charge point 810 may charge the vehicle V81 based on the maximum charging current-48A of the gateway charge point 810. Next, during the process of charging the vehicle V81, a charging gun of the client charge point 820_1 is inserted into a charging port of a vehicle V82. It is assumed that the total current limit of the charge point group including the gateway charge point 810 and the client charge points 820_1 to 820_4 is-100A. The gateway charge point 810 may determine the non-average current values based on the spare charging current-10A, the quantity of offline charge points, the order of vehicles connected, and the total current limit-100A of the charge point group. Here, since a time point at which the vehicle V82 is connected to the client charge point 820_1 is later than a time point at which the vehicle V81 is connected to the gateway charge point 810, the gateway charge point 810 may determine a non-average current value of the client charge point 820_1 as (100A-2*10A)-48A=32A.

Next, during the process of charging the vehicle V81 and the vehicle V82, a charging gun of the client charge point 820_2 is inserted into a charging port of the vehicle V83. Since the vehicle V83 is the last to be connected to client charge point 820_2, and the total current limit of the charge point group has been completely assigned to the gateway charge point 810 and the client charge point 820_1, the gateway charge point 810 may determine a non-average current value of client charge point 820_2 as 0A. In other words, during the process of charging the vehicle V81 and the vehicle V82, the gateway charge point 810 may control the client charge point 820_2 to stop charging.

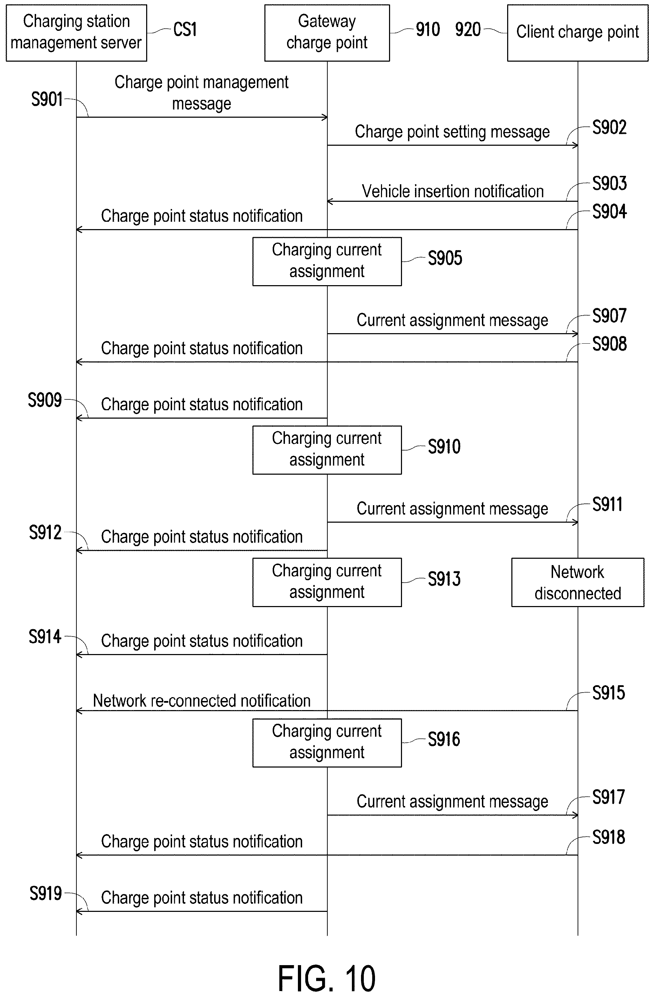

FIG. 10 is a flowchart of assigning charging current by a gateway charge point according to an embodiment of the disclosure. Referring to FIG. 10, a gateway charge point 910 (for example, the first gateway charge point) may be connected to a client charge point 920 (that is, the first client charge point) via the WLAN, and may be communicatively connected to the charging station management server CS1. In some embodiments, the gateway charge point 910, the client charge point 920, and the charging station management server CS1 may communicate based on the OCPP protocol.

In step S901, the charging station management server CS1 may send a charge point management message to the gateway charge point 910. The charge point management message may include information such as total current limit, a group ID and a group size of the charge point group, spare charging current, and a load assigning mechanism. The aforementioned load assigning mechanism is, for example, an average assigning mechanism or a priority assigning mechanism. In step S902, the gateway charge point 910 may send a charge point setting message to the client charge point 920. The charge point setting message may include the group ID of the charge point group and the spare charging current.

In step S903, when the vehicle is connected to the client charge point 920, the client charge point 920 detects that the charging gun has been inserted, and sends a vehicle insertion notification to the gateway charge point 910 to drive the gateway charge point 910 to start preparing for assigning charging current. In step S904, the client charge point 920 may send a charge point status notification of the OCPP protocol to the charging station management server CS1. The charge point status notification may include information such as "preparing".

In step S905, the gateway charge point 910 may assign charging current based on the total current limit of the charge point group and the load assigning mechanism specified by the charging station management server CS1, to determine a target charging current value of the client charge point 920. In step S907, the gateway charge point 910 sends a current assignment message to the client charge point 920. The current assignment message includes the aforementioned target charging current value.

In step S908, when the client charge point 920 charges the vehicle based on the target charging current value assigned by the gateway charge point 910, the client charge point 920 may send a charge point status notification of the OCPP protocol to the charging station management server CS1. The charge point status notification may include information such as "charging" and present charging status.

In step S909, when another vehicle is connected to the gateway charge point 910, the gateway charge point 910 detects that the charging gun has been inserted. The gateway charge point 910 may send a charge point status notification to the charging station management server CS1. The charge point status notification may include information such as "preparing".

In step S910, the gateway charge point 910 may assign charging current based on the total current limit of the charge point group and the load assigning mechanism specified by the charging station management server CS1, to calculate new target charging current values for the client charge point 920 and the gateway charge point 910. In step S911, the gateway charge point 910 sends a current assignment message to the client charge point 920. The current assignment message includes the new target charging current value. Correspondingly, the client charge point 920 may switch to charge the vehicle by the new target charging current value.

In step S912, when the vehicle is being charged based on a target charging current value determined in step S910, the gateway charge point 910 may send a charge point status notification of the OCPP protocol to the charging station management server CS1. The charge point status notification may include information such as "charging" and present charging status.

In step S913, when detected that the client charge point 920 and the gateway charge point 910 are disconnected, the gateway charge point 910 may assign charging current based on the total current limit of the charge point group, spare charging current value, and load assigning mechanism specified by the charging station management server CS1. When the client charge point 920 and the gateway charge point 910 are disconnected, the client charge point 920 may continue to charge the vehicle based on the spare charging current value. In another aspect, the gateway charge point 910 may determine its own target charging current value based on the total current limit of the charge point group, the spare charging current value, and the load assigning mechanism specified by the charging station management server CS1.

In step S914, when changing the target charging current value, the gateway charge point 910 may send a charge point status notification including the present target charging current value to the charging station management server CS1. In step S915, when the gateway charge point 910 and the client charge point 920 are reconnected, the charging station management server CS1 may receive a network re-connected notification sent by the client charge point 920.

In step S916, since the client charge point 920 switches from the offline status to the online status, the gateway charge point 910 may re-assign charging current to determine the charging current value of each of the charge points. In step S917, the gateway charge point 910 sends a current assignment message to the client charge point 920. The current assignment message includes the new target charging current value.

In step S918, when changing the target charging current value, the client charge point 920 may send a charge point status notification including the present target charging current value to the charging station management server CS1. In step S919, when changing the target charging current value, the gateway charge point 910 may send a charge point status notification including the present target charging current value to the charging station management server CS1.

Based on the flow of FIG. 10, the gateway charge point 910 may dynamically adjust the charging current of each of the charge points within the charge point group based on the vehicle connection status of each of the charge points within the charge point group and the connection status of each of the charge points, thereby achieving localized load management.

In some embodiments, the charge point communication system may further include a spare gateway charge point. When the gateway charge point (for example, the first gateway charge point) is disconnected from the charging station management server, the charging station management server activates the spare gateway charge point, so that the spare gateway charge point may be connected to the client charge points (that is, the first client charge points) via the first physical layer protocol, and may be communicatively connected to the charging station management server. In some embodiments, the client charge points switch from connecting to the gateway charge point to connecting to the spare gateway charge point without changing connection setting data.

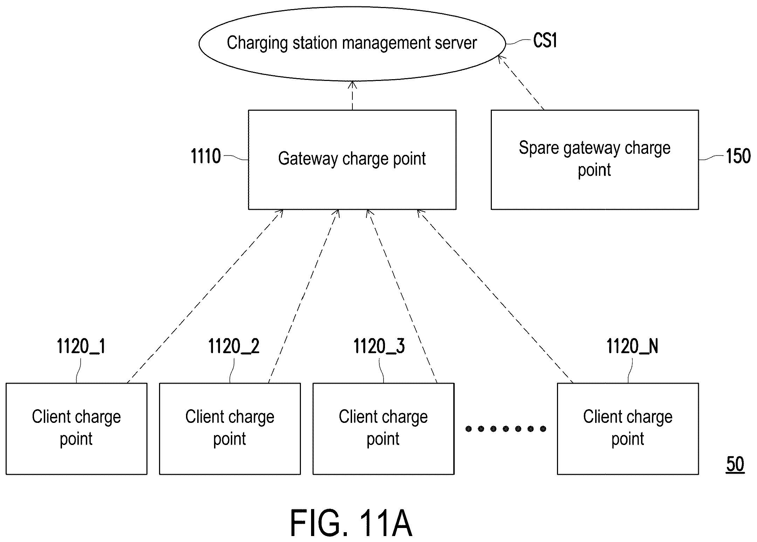

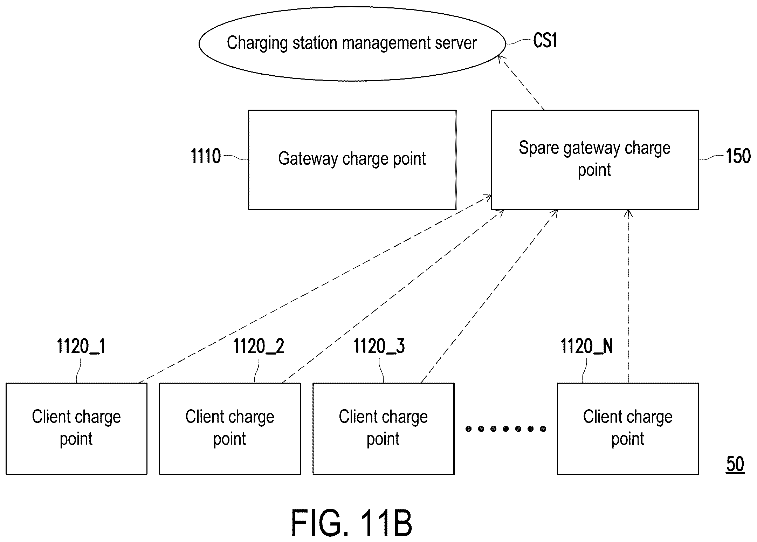

For example, FIG. 11A and FIG. 11B are schematic diagrams of activating a spare gateway charge point according to an embodiment of the disclosure. Referring to FIG. 11A first, a charge point communication system 50 may include a gateway charge point 1110 (that is, the first gateway charge point), a spare gateway charge point 150, and multiple client charge points 1120_1 to 1120_N (that is, the first client charge points). The gateway charge point 1110 and the spare gateway charge point 150 may be connected to the charging station management server CS1 via the mobile communication network or the wireless local area network, and may register with the charging station management server CS1 to ensure that the gateway charge point 1110 and the spare gateway charge point 150 may be identified and managed by the charging station management system.

It should be noted that after the gateway charge point 1110 establishes an OCPP connection with the charging station management server CS1, the charging station management server CS1 may first enable a Wi-Fi AP function of the gateway charge point 1110. In another aspect, after the spare gateway charge point 150 establishes an OCPP connection with the charging station management server CS1, the charging station management server CS1 may first disable a Wi-Fi AP function of the spare gateway charge point 150. Therefore, the client charge points 1120_1 to 1120_N may only establish Wi-Fi connections with the gateway charge point 1110, so that the gateway charge point 1110 may manage the communication and charging scheduling of the client charge points 1120_1 to 1120_N.

Referring to FIG. 11B, when the OCPP connection of the gateway charge point 1110 and the charging station management server CS1 is disconnected, or when the Wi-Fi AP function of the gateway charge point 1110 shows an abnormality, the charging station management server CS1 may enable (or remove disablement of) the Wi-Fi AP function of the spare gateway charge point 150. Therefore, the client charge points 1120_1 to 1120_N may switch to establish the Wi-Fi connections with the spare gateway charge point 150, so that the spare gateway charge point 150 may manage the communication and charging scheduling of the client charge points 1120_1 to 1120_N. It should be noted that based on pre-setting, the client charge points 1120_1 to 1120_N may establish the Wi-Fi connections with the spare gateway charge point 150 by the same SSID and password. Therefore, even if the gateway charge point 1110 shows an abnormality or failure, the client charge points 1120_1 to 1120_N may instead establish OCPP connections with the charging station management server CS1 through the spare gateway charge point 150.

In some embodiments, in the charge point communication system in a multi-layer wireless local area network architecture, each of the gateway charge points may correspond to a spare gateway charge point to ensure that when any gateway charge point shows an abnormality or communication failure, the charge point communication system may remain operable to maintain charging management and data exchange of the client charge points.

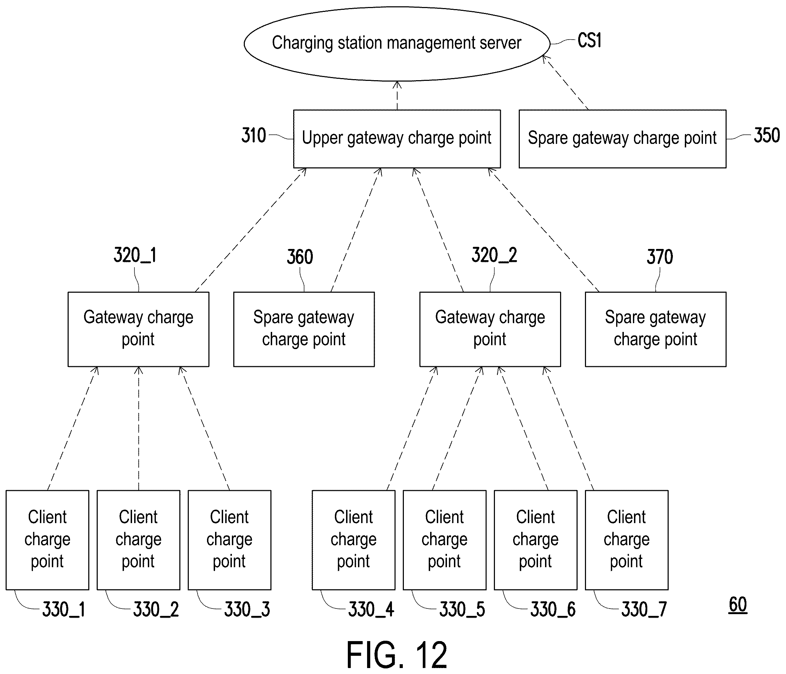

FIG. 12 is a schematic diagram of configuring a spare gateway charge point according to an embodiment of the disclosure. Referring to FIG. 12, a charge point communication system 60 in a multi-layer wireless local area network architecture may include an upper gateway charge point 310, gateway charge points 320_1 to 320_2 (that is, the first gateway charge point 320_1 and the second gateway charge point 320_2) and multiple client charge points 330_1 to 330_7 (that is, the first client charge points 330_1 to 330_3 and the second client charge points 330_4 to 330_7). In addition, the charge point communication system 60 may further include a spare gateway charge point 350 corresponding to the upper gateway charge point 310, a spare gateway charge point 360 corresponding to the first gateway charge point 320_1, and a spare gateway charge point 370 corresponding to the second gateway charge point 320_2.

In some embodiments, when the first gateway charge point is disconnected from the charging station management server, the charging station management server may activate the second gateway charge point as a spare gateway charge point, so that the second gateway charge point may be connected to the first client charge points within the first charge point group via the first physical layer protocol. In other words, the second gateway charge point 320_2 of the same layer may also serve as a spare gateway charge point for the first gateway charge point 320_1 to be connected to the first client charge points 330_1 to 330_3 within the first charge point group, so that the second gateway charge point 320_2 may alternatively change to control the first client charge points 330_1 to 330_3, or control the second client charge points 330_4 to 330_7 and the first client charge points 330_1 to 330_3 at the same time.

It should be noted that, in order to activate the spare gateway charge points 360 and 370 at any time, the spare gateway charge points 360 and 370 must maintain the Wi-Fi connections with the upper gateway charge point 310. That is, when the gateway charge point 320_1 shows no failure or abnormality, the Wi-Fi STA function of the spare gateway charge point 360 remains enabled, but the Wi-Fi AP function is disabled. Once the gateway charge point 320_1 shows a failure or an abnormality, the charging station management server CS1 may enable (remove disablement of) the Wi-Fi AP function of the spare gateway charge point 360, so that the spare gateway charge point 360 may replace the gateway charge point 320_1 to serve as the manager of the client charge points 330_1 to 330_3. Similarly, in order to activate the spare gateway charge point 350/150 at any time, the spare gateway charge point 350/150 must maintain the connections with the charging station management server CS1.

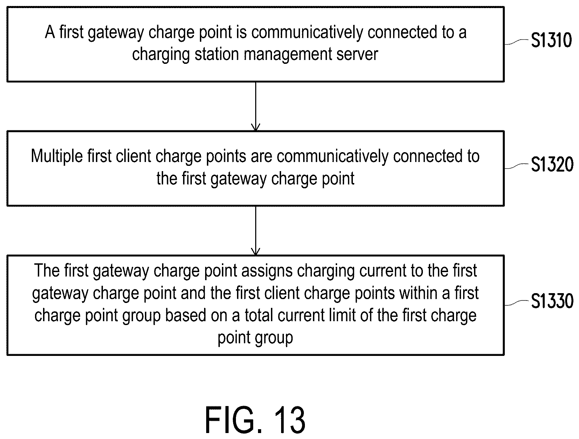

FIG. 13 is a flowchart of a charge point communication method according to an embodiment of the disclosure. Referring to FIG. 13, in step S1310, a first gateway charge point is communicatively connected to a charging station management server. In step S1320, the first client charge points are communicatively connected to the first gateway charge point. In step S1330, the first gateway charge point assigns charging current to each of the first gateway charge point and the first client charge points within the first charge point group based on the total current limit of the first charge point group. Each step in FIG. 13 has been described in detail above and will not be repeated here. In addition, the method of FIG. 13 may be used in combination with the aforementioned embodiments, or may be used independently, and the disclosure is not limited thereto.

To sum up, in the embodiments of the disclosure, the client charge points may communicate with the charging station management server by the gateway charge points, so that the client charge points do not need to equip with capability of connecting to the mobile communication network, thereby improving the deployment flexibility of the charge points and significantly reducing consumption of the mobile communication network resources. In addition, the gateway charge points may perform localized charging load management, and dynamically assign charging current based on charging demand, vehicle battery status, and total current limit, thereby avoiding untimely scheduling caused by delayed responses from the charging station management server or congestion in the mobile communication network. Through the gateway charge points, localized charging load management can be executed, which also reduces mobile network traffic consumption and improves communication stability of the charge points. Furthermore, when the gateway charge points encounter abnormalities or failures, the spare gateway charge points can take over operations to maintain the communication stability and continuity of charging management within the charge point group.

## Claims

1. A charge point communication system (10, 20, 30, 50, 60), comprising:
a first gateway charge point (110, 210, 320_1, 510, 610, 710, 810, 910, 1110), communicatively connected to a charging station management server (CS1); and
a plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N), communicatively connected to the first gateway charge point (110, 210, 320_1, 510, 610, 710, 810, 910, 1110),
wherein the first gateway charge point (110, 210, 320_1, 510, 610, 710, 810, 910, 1110) assigns charging current to the first gateway charge point (110, 210, 320_1, 510, 610, 710, 810, 910, 1110) and the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) within a first charge point group (CG11, CG21, CG41) based on a total current limit of the first charge point group (CG11, CG21, CG41).

2. The charge point communication system (10, 20, 30, 50, 60) according to claim 1, further comprising:
an upper gateway charge point (310), communicatively connected between the first gateway charge point (110, 210, 320_1, 510, 610, 710, 810, 910, 1110) and the charging station management server (CS1).

3. The charge point communication system (10, 20, 30, 50, 60) according to claim 2, further comprising:
a second gateway charge point (320_2), communicatively connected to the upper gateway charge point (310); and
a plurality of second client charge points (330_(N+1) to 330_2N), communicatively connected to the second gateway charge point (320_2),
wherein the second gateway charge point (320_2) assigns charging current to the second gateway charge point (320_2) and the plurality of second client charge points (330_(N+1) to 330_2N) within a second charge point group (CG42) based on a total current limit of the second charge point group (CG42).

4. The charge point communication system (10, 20, 30, 50, 60) according to claim 1, further comprising a spare gateway charge point (150, 350, 360, 370), communicatively connected to the charging station management server (CS1),
wherein when the first gateway charge point (110, 210, 320_1, 510, 610, 710, 810, 910, 1110) is disconnected from the charging station management server (CS1), the charging station management server (CS1) activates the spare gateway charge point (150, 350, 360, 370), so that the spare gateway charge point (150, 350, 360, 370) is communicatively connected to the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N).

5. A charge point communication method, comprising:
communicatively connecting a first gateway charge point (110, 210, 320_1, 510, 610, 710, 810, 910, 1110) to a charging station management server (CS1);
communicatively connecting a plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) to the first gateway charge point (110, 210, 320_1, 510, 610, 710, 810, 910, 1110); and
the first gateway charge point (110, 210, 320_1, 510, 610, 710, 810, 910, 1110) assigning charging current to the first gateway charge point (110, 210, 320_1, 510, 610, 710, 810, 910, 1110) and the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) within a first charge point group (CG11, CG21, CG41) based on a total current limit of the first charge point group (CG11, CG21, CG41).

6. The charge point communication method according to claim 5, further comprising:
the first gateway charge point (110, 210, 320_1, 510, 610, 710, 810, 910, 1110) receiving the total current limit of the first charge point group (CG11, CG21, CG41) from the charging station management server (CS1).

7. The charge point communication method according to claim 5, wherein the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) are communicatively connected to the first gateway charge point (110, 210, 320_1, 510, 610, 710, 810, 910, 1110) via a first physical layer protocol, the first gateway charge point (110, 210, 320_1, 510, 610, 710, 810, 910, 1110) is communicatively connected to the charging station management server (CS1) via a second physical layer protocol, the first physical layer protocol comprises a wireless local area network protocol, and the second physical layer protocol comprises a mobile communication network protocol.

8. The charge point communication method according to claim 5, further comprising:
an upper gateway charge point (310), communicatively connecting between the first gateway charge point (110, 210, 320_1, 510, 610, 710, 810, 910, 1110) and the charging station management server (CS1).

9. The charge point communication method according to claim 8, wherein the first gateway charge point (110, 210, 320_1, 510, 610, 710, 810, 910, 1110) simultaneously operates in an access point mode and a station mode to communicate with the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) via the access point mode and communicate with the upper gateway charge point (310) via the station mode.

10. The charge point communication method according to claim 8, further comprising:
communicatively connecting a second gateway charge point (320_2) to the upper gateway charge point (310);
communicatively connecting a plurality of second client charge points (330_(N+1) to 330_2N) to the second gateway charge point (320_2) ; and
the second gateway charge point (320_2) assigning charging current to the second gateway charge point (320_2) and the plurality of second client charge points (330_(N+1) to 330_2N) within a second charge point group (330_(N+1) to 330_2N) based on a total current limit of the second charge point group (CG42).

11. The charge point communication method according to claim 10, further comprising:
the first gateway charge point (110, 210, 320_1, 510, 610, 710, 810, 910, 1110) receiving the total current limit of the first charge point group (CG11, CG21, CG41) from the charging station management server (CS1); and
the second gateway charge point (320_2) receiving the total current limit of the second charge point group (CG42) from the charging station management server (CS1).

12. The charge point communication method according to claim 5, wherein the first gateway charge point (110, 210, 320_1, 510, 610, 710, 810, 910, 1110) determines an average current value based on a vehicle connection quantity within the first charge point group (CG11, CG21, CG41) and the total current limit of the first charge point group (CG11, CG21, CG41) to implement an average assigning mechanism; and
the first gateway charge point (110, 210, 320_1, 510, 610, 710, 810, 910, 1110) controls the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) to charge vehicles (V51 to V53, V61 to V63, V71 to V73, V81 to V83) by the average current value.

13. The charge point communication method according to claim 5, wherein
when at least one of the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) is disconnected from the first gateway charge point (110, 210, 320_1, 510, 610, 710, 810, 910, 1110) and becomes an offline charge point, the first client charge point reserves a spare charging current for the offline charge point.

14. The charge point communication method according to claim 5, wherein
the first gateway charge point (110, 210, 320_1, 510, 610, 710, 810, 910, 1110) determines non-average current values based on time at which vehicles (V51 to V53, V61 to V63, V71 to V73, V81 to V83) are connected to the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) and the total current limit of the first charge point group (CG11, CG21, CG41) to implement a priority assigning mechanism; and
the first gateway charge point (110, 210, 320_1, 510, 610, 710, 810, 910, 1110) controls the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) are controlled to charge the vehicles (V51 to V53, V61 to V63, V71 to V73, V81 to V83) by the non-average current values.

15. The charge point communication method according to claim 13, wherein
the first gateway charge point (110, 210, 320_1, 510, 610, 710, 810, 910, 1110) determines non-average current values based on the spare charging current, time at which vehicles (V51 to V53, V61 to V63, V71 to V73, V81 to V83) are connected to the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N), and the total current limit of the first charge point group (CG11, CG21, CG41).

16. The charge point communication method according to claim 5, further comprising:
activating a spare gateway charge point (150, 350, 360, 370) when the first gateway charge point (110, 210, 320_1, 510, 610, 710, 810, 910, 1110) is disconnected from the charging station management server (CS1), so that the spare gateway charge point (150, 350, 360, 370) is communicatively connected to the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N).

17. The charge point communication method according to claim 8, further comprising:
activating a spare gateway charge point (150, 350, 360, 370) when the upper gateway charge point (310) is disconnected from the charging station management server (CS1), so that the spare gateway charge point (150, 350, 360, 370) is communicatively connected to the plurality of first gateway charge points (110, 210, 320_1, 510, 610, 710, 810, 910, 1110).

18. The charge point communication method according to claim 10, wherein activating the second gateway charge point (320_2) as a spare gateway charge point (150, 350, 360, 370) when the first gateway charge point (110, 210, 320_1, 510, 610, 710, 810, 910, 1110) is disconnected from the charging station management server (CS1), so that the second gateway charge point (320_2) is communicatively connected to the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) of the first charge point group (CG11, CG21, CG41).

19. The charge point communication method according to claim 16, wherein the plurality of first client charge points (120_1 to 120_N, 220_1 to 220_N, 330_1 to 330_N, 520_1 to 520_2, 620_1 to 620_4, 720_1 to 720_2, 820_1 to 820_4, 920, 1120_1 to 1120_N) switch from connecting to the first gateway charge point (110, 210, 320_1, 510, 610, 710, 810, 910, 1110) to connecting to the spare gateway charge point (150, 350, 360, 370) without changing connection setting data.
